# EUROPEAN PATENT APPLICATION

(11) **EP 4 614 318 A1**
(43) Date of publication of application: **10.09.2025**
(21) Application number: 23893779.1
(22) Date of filing: 20.11.2023
(51) Int. Cl.: G06F 9/38

(54) **REGISTER PARAMETER TRANSFER METHOD FOR BLOCK INSTRUCTION, AND RELATED DEVICE**

(30) Priority: 22.11.2022 CN 202211466485
(71) Applicant: Huawei Technologies Co., Ltd., Shenzhen, Guangdong 518129 (CN)
(72) Inventor: LI, Guozhu, Shenzhen, Guangdong 518129 (CN)
(74) Representative: Epping - Hermann - Fischer
(86) International application number: PCT/CN2023/132608
(87) International publication number: WO 2024/109689

(57) **Abstract**

This application discloses a register parameter transfer method for a block instruction and a related device. The method may include: establishing a register mapping table for P global registers among M global registers and P intra-block registers among N intra-block registers, determining that input data of an i^{th} intra-block instruction among K intra-block instructions included in a block body comes from a j^{th} intra-block register among the P intra-block registers, where i is 1, 2, ..., or K, and j is 1, 2, ..., or P; and determining, based on the register mapping table, a target register among the P global registers that corresponds to the j^{th} intra-block register, obtaining the input data from the target register, and executing the i^{th} intra-block instruction. In this application, execution efficiency and reusability of block body code can be improved.

## Description

### TECHNICAL FIELD

This application relates to the field of computer technologies, and in particular, to a register parameter transfer method for a block instruction and a related device.

### BACKGROUND

With continuous development of computer technologies, execution efficiency of a large processor is usually improved by increasing a quantity of computing units. A direct manner of fully utilizing capabilities of the computing units is a multi-thread, multi-core, and multi-processor design. In this manner, system software needs to actively distribute a task to different execution threads, and the computing units are independently used by the different threads.

To increase a granularity of thread execution, in the conventional technology, a processor can schedule a block instruction. To be specific, the processor can schedule a group of instructions instead of one instruction. Scheduling the block instruction by the processor usually includes two layers: A first layer is a block header, and a second layer is a block body. When executing the block instruction, the processor needs to transfer a register parameter between the block header layer and the block body layer. For example, specifically used global registers are declared in the block header, and then the global registers are directly indexed in a specific intra-block instruction in the block body. In this case, although normal execution of the block instruction is ensured, low execution efficiency of the block instruction, poor reusability of block body code, and other problems are likely to occur.

Therefore, how to provide a register parameter transfer method to improve execution efficiency and reusability of block body code is an urgent problem to be resolved.

### SUMMARY

Embodiments of this application provide a register parameter transfer method for a block instruction and a related device, to improve execution efficiency and reusability of block body code.

According to a first aspect, an embodiment of this application provides a register parameter transfer method for a block instruction. The block instruction includes a block header and a block body. The block header indicates M global registers corresponding to the block instruction. The block body includes K intra-block instructions. The K intra-block instructions correspond to N intra-block registers. K is an integer greater than 0. The method may include: establishing a mapping relationship between P global registers among the M global registers and P intra-block registers among the N intra-block registers, to obtain a register mapping table, where the P global registers are in a one-to-one correspondence with the P intra-block registers, and both M and N are integers greater than 0; determining that input data of an i^{th} intra-block instruction among the K intra-block instructions comes from a j^{th} intra-block register among the P intra-block registers, where i is 1, 2, ..., or K, and j is 1, 2, ..., or P; and determining, based on the register mapping table, a target register among the P global registers that corresponds to the j^{th} intra-block register, obtaining the input data from the target register, and executing the i^{th} intra-block instruction.

In the conventional technology, a register parameter is usually transferred between a block header layer and a block body layer through direct indexing or by using a default output register. However, in the direct indexing manner, an address of a corresponding global register needs to be directly indexed in a block body, and a result of each intra-block instruction also needs to be temporarily stored in the global register. This is not conducive to speculative execution, and execution efficiency is low. In addition, the global register is directly indexed in block body code. This is not conducive to reuse of the block body code. When the default output register is used, an instruction such as get or set needs to be additionally used. The instruction occupies large space, and the instruction such as get or set needs to use a global ID of a global register to index the global register. This is not conducive to reuse of block body code either. According to the method provided in the first aspect, in this embodiment of this application, a register mapping table may be established for a global register indicated by the block header and an intra-block register preset in the block body, so that a block engine can perform indexing and output to the global register based on the intra-block register. This improves execution efficiency. In addition, an intra-block instruction in the block body may no longer rely on instructions such as get and set to index or assign a value to the global register, so that space additionally occupied by intra-block instructions such as get and set in the block body is reduced. Further, an ID of a global register may no longer be used in an intra-block instruction of the block instruction. In this way, when two or more block instructions have a same pattern but use different global registers, the two or more block instructions may share one block body, so that block body code does not need to be repeatedly written, and reusability of the block body code is improved. In a possible implementation, the determining that input data of an i^{th} intra-block instruction among the K intra-block instructions comes from a j^{th} intra-block register among the P intra-block registers includes: determining the j^{th} intra-block register based on input information in the i^{th} intra-block instruction, where an intra-block register corresponding to an execution result of the i^{th} intra-block instruction is a t^{th} intra-block register, and when t is greater than or equal to j, the input information includes a relative distance t-j between the t^{th} intra-block register and the j^{th} intra-block register, or when t is less than j, the input information includes a relative distance N-j+t between the t^{th} intra-block register and the j^{th} intra-block register.

In this embodiment of this application, input information of an intra-block instruction includes a relative distance between an intra-block register corresponding to an execution result of the current intra-block instruction and an intra-block register that the current intra-block instruction needs to index, so that a block instruction-based processor can determine, based on the relative distance, the intra-block register that the current intra-block instruction needs to index. This simplifies logic of indexing the intra-block register, and further improves execution efficiency.

In a possible implementation, the establishing a mapping relationship between P global registers among the M global registers and P intra-block registers among the N intra-block registers includes: determining, based on input information and intra-block registers corresponding to respective execution results of the K intra-block instructions, the P intra-block registers corresponding to respective input data of the K intra-block instructions; and establishing the mapping relationship between the P intra-block registers and the P global registers.

In this embodiment of this application, during establishment of the register mapping table, input information of an intra-block instruction in the block body and an intra-block output register corresponding to an execution result of the intra-block instruction are first determined, an intra-block input register corresponding to input data of the intra-block instruction is determined correspondingly, and then a register mapping table is established for the intra-block input register and a global register, to ensure that the intra-block instruction can find, through indexing, the global register to obtain the input data during execution. On this basis, the block instruction can also find, through indexing, the global register and output an execution result when execution of the block instruction ends.

In a possible implementation, the intra-block registers corresponding to the respective execution results of the K intra-block instructions include S intra-block registers, and the method further includes: establishing a mapping relationship between S global registers among the M global registers and the S intra-block registers, where the S global registers are in a one-to-one correspondence with the S intra-block registers.

In this embodiment of this application, during establishment of the register mapping table, an output index relationship may be established between a global output register (namely, the S global registers) and an intra-block output register (namely, the S intra-block registers), to ensure that the block instruction can also find, through indexing, a global register and output an execution result when execution of the block instruction ends.

In a possible implementation, the establishing a mapping relationship between P global registers among the M global registers and P intra-block registers among the N intra-block registers includes: establishing the mapping relationship between the P intra-block registers and the P global registers based on a sequence of the P intra-block registers corresponding to the respective input data of the K intra-block instructions among the N intra-block registers and an indication sequence of the P global registers in the block header; and the establishing a mapping relationship between S global registers among the M global registers and the S intra-block registers includes: establishing the mapping relationship between the S intra-block registers and the S global registers based on a sequence of the S intra-block registers among the N intra-block registers and an indication sequence of the S global registers in the block header. In this embodiment of this application, during establishment of the register mapping table, a mapping relationship may be established between an intra-block input register and a global input register based on a sequence of intra-block input registers (namely, the P intra-block registers) respectively corresponding to intra-block instructions among the N intra-block registers and an indication sequence of global input registers (namely, the P global registers) in the block header, and a mapping relationship is established between an intra-block output register and a global output register based on a sequence of intra-block output registers (namely, the S intra-block registers) respectively corresponding to the intra-block instructions and an indication sequence of global output registers (namely, the S global registers) in the block header. This simplifies mapping logic and reduces difficulty in maintaining the register mapping table.

In a possible implementation, the register mapping table further includes the mapping relationship between the S global registers and the S intra-block registers, and the method further includes: separately outputting, based on the register mapping table, an execution result or execution results of one or more intra-block instructions among the K intra-block instructions to a corresponding global register among the S global registers, and committing the block instruction.

In this embodiment of this application, after execution of an intra-block instruction in the block instruction is completed, an execution result of the block body in the block instruction may be output, based on the register mapping table, to a global output register (namely, the S global registers) indicated by the block header, and the block instruction is committed, so that a corresponding program subsequently accesses the register to obtain the execution result. This ensures that a block instruction-based processor can efficiently and accurately process more block instructions.

According to a second aspect, an embodiment of this application provides a register parameter transfer apparatus for a block instruction. The block instruction includes a block header and a block body. The block header indicates M global registers corresponding to the block instruction. The block body includes K intra-block instructions. The K intra-block instructions correspond to N intra-block registers. K is an integer greater than 0. The apparatus may include: a first processing module, configured to establish a mapping relationship between P global registers among the M global registers and P intra-block registers among the N intra-block registers, to obtain a register mapping table, where the P global registers are in a one-to-one correspondence with the P intra-block registers, and both M and N are integers greater than 0; a determining module, configured to determine that input data of an i^{th} intra-block instruction among the K intra-block instructions comes from a j^{th} intra-block register among the P intra-block registers, where i is 1, 2, ..., or K, and j is 1, 2, ..., or P; and a second processing module, configured to determine, based on the register mapping table, a target register among the P global registers that corresponds to the j^{th} intra-block register, obtain the input data from the target register, and execute the i^{th} intra-block instruction.

In this embodiment of this application, the register parameter transfer apparatus for a block instruction may establish a register mapping table for a global register indicated by the block header and an intra-block register preset in the block body, so that a block engine can perform indexing and output to the global register based on the intra-block register. This improves execution efficiency. In addition, an intra-block instruction in the block body may no longer rely on instructions such as get and set to index or assign a value to the global register, so that space additionally occupied by use of intra-block instructions such as get and set in the block body is reduced. Further, an ID of a global register may no longer be used in an intra-block instruction of the block instruction. In this way, when two or more block instructions have a same pattern but use different global registers, the two or more block instructions may share one block body, so that block body code does not need to be repeatedly written, and reusability of the block body code is improved.

In a possible implementation, the determining module is specifically configured to determine the j^{th} intra-block register based on input information in the i^{th} intra-block instruction, where an intra-block register corresponding to an execution result of the i^{th} intra-block instruction is a t^{th} intra-block register, and when t is greater than or equal to j, the input information includes a relative distance t-j between the t^{th} intra-block register and the j^{th} intra-block register, or when t is less than j, the input information includes a relative distance N-j+t between the t^{th} intra-block register and the j^{th} intra-block register.

In a possible implementation, the first processing module is specifically configured to: determine, based on input information and intra-block registers corresponding to respective execution results of the K intra-block instructions, the P intra-block registers corresponding to respective input data of the K intra-block instructions; and establish the mapping relationship between the P intra-block registers and the P global registers.

In a possible implementation, the intra-block registers corresponding to the respective execution results of the K intra-block instructions include S intra-block registers, and the apparatus further includes: a third processing module, configured to establish a mapping relationship between S global registers among the M global registers and the S intra-block registers, where the S global registers are in a one-to-one correspondence with the S intra-block registers. In a possible implementation, the first processing module is specifically configured to establish the mapping relationship between the P intra-block registers and the P global registers based on a sequence of the P intra-block registers corresponding to the respective input data of the K intra-block instructions among the N intra-block registers and an indication sequence of the P global registers in the block header; and the third processing module is specifically configured to establish the mapping relationship between the S intra-block registers and the S global registers based on a sequence of the S intra-block registers among the N intra-block registers and an indication sequence of the S global registers in the block header.

In a possible implementation, the register mapping table further includes the mapping relationship between the S global registers and the S intra-block registers, and the apparatus further includes: a fourth processing module, configured to separately output, based on the register mapping table, an execution result or execution results of one or more intra-block instructions among the K intra-block instructions to a corresponding global register among the S global registers, and commit the block instruction.

According to a third aspect, an embodiment of this application provides a computer-readable storage medium, configured to store computer software instructions used for the device apparatus that is configured to implement the register parameter transfer method for a block instruction and that is provided in one or more implementations of the second aspect. The computer software instructions include a program designed for performing the foregoing aspects. According to a fourth aspect, an embodiment of this application provides a computer program. The computer program includes instructions. When the computer program is executed by a computer, the computer is enabled to perform the process performed by the apparatus that is configured to implement the register parameter transfer method for a block instruction and that is provided in one or more implementations of the second aspect.

According to a fifth aspect, an embodiment of this application provides a terminal device. The terminal device includes a processor. The processor is configured to support the terminal device in implementing a corresponding function in the register parameter transfer method for a block instruction provided in the first aspect. The terminal device may further include a memory. The memory is configured to be coupled to the processor, and the memory stores program instructions and data that are necessary for the terminal device. The terminal device may further include a communication interface, configured to implement communication between the terminal device and another device or a communication network.

According to a sixth aspect, an embodiment of this application provides a chip system. The chip system includes a processor, configured to support a device in implementing a function in the first aspect, for example, generating or processing information in the register parameter transfer method for a block instruction. In a possible design, the chip system further includes a memory, and the memory is configured to store program instructions and data that are necessary for the device. The chip system may include a chip, or may include a chip and another discrete component.

### BRIEF DESCRIPTION OF DRAWINGS

To describe technical solutions in embodiments of this application or in the background more clearly, the following describes accompanying drawings used in embodiments of this application or in the background.
FIG. 1 is a diagram of an execution queue of speculative execution;
FIG. 2 is a diagram of a system architecture to which a register parameter transfer method for a block instruction is applied according to an embodiment of this application;
FIG. 3 is a diagram of a structure of a block header according to an embodiment of this application;
FIG. 4 is a diagram of a structure of a block body according to an embodiment of this application;
FIG. 5 is a schematic flowchart of a register parameter transfer method for a block instruction according to an embodiment of this application;
FIG. 6 is a diagram of an intra-block register management queue according to an embodiment of this application;
FIG. 7 is a diagram of an architecture of a register parameter transfer process for a block instruction according to this application; and
FIG. 8 is a diagram of a structure of a register parameter transfer apparatus for a block instruction according to an embodiment of this application.

### DESCRIPTION OF EMBODIMENTS

The following describes embodiments of this application with reference to accompanying drawings in embodiments of this application.

In the specification, claims, and accompanying drawings of this application, the terms "first", "second", "third", "fourth", and the like are intended to distinguish between different objects but do not indicate a particular order. In addition, the terms "include", "have", and any variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this specification indicates that a particular feature, structure, or characteristic described with reference to the embodiment may be included in one or more embodiments of this application. The phrase appearing in various locations in this specification does not necessarily mean a same embodiment, and neither means an independent or alternative embodiment mutually exclusive with another embodiment. It is explicitly and implicitly understood by persons skilled in the art that embodiments described in this specification may be combined with another embodiment.

The terms "component", "module", and "system" and the like used in this specification indicate a computer-related entity, hardware, firmware, a combination of hardware and software, software, or software being executed. For example, a component may be, but is not limited to, a process that is run on a processor, a processor, an object, an executable file, an execution thread, a program, and/or a computer. As illustrated by using figures, both a computing device and an application that is run on the computing device may be components. One or more components may reside in a process and/or an execution thread, and a component may be located on one computer and/or distributed between two or more computers. In addition, these components may be executed from various computer-readable media that store various data structures. For example, the component may perform communication through a local process and/or a remote process based on a signal with one or more data packets (for example, data from two components that interact with another component in a local system, a distributed system, and/or a network, for example, an internet that interacts with another system through a signal).

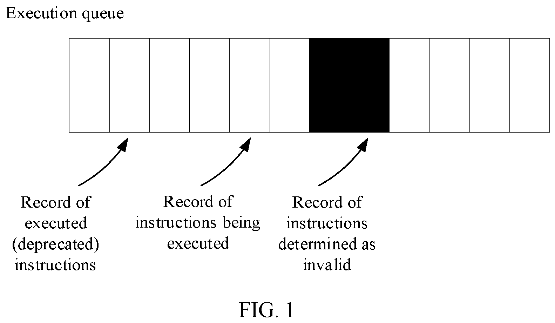

First, some terms in this application are described for ease of understanding by persons skilled in the art.
(1) A superscalar processor is a processor that can run a plurality of instructions in a clock cycle. An implementation means of the superscalar processor is to perform speculative execution to improve thread execution efficiency. FIG. 1 is a diagram of an execution queue of speculative execution. The execution queue may include a record of executed (deprecated) instructions, a record of instructions being executed, and a record of to-be-executed instructions. The superscalar processor may perform speculative execution on the record of to-be-executed instructions. However, if it is determined that an instruction record is invalid, the instruction record and a subsequent instruction record are all deleted, and a valid record is re-added by starting from an invalid location. Therefore, to ensure accuracy of speculative execution, the superscalar processor needs to pay high costs to manage a long queue, to obtain an execution branch feature of a longer range.
(2) A block instruction includes a block header and a block body. The block header is usually an unconditional block description for describing a dependency relationship of an entire block, for example, an attribute and a type of the block instruction, a register input, a register output, a pointer of a next block header, and a pointer of the block body. The block body includes actual instruction execution, and represents specific computing of the block instruction. The block body includes a series of intra-block instructions, and the block body is executed by a block engine in a processor.
(3) "A plurality of" in this application means two or more. "And/or" describes an association relationship between associated objects and indicates that three relationships may exist. For example, A and/or B may indicate the following three cases: Only A exists, both A and B exist, and only B exists. The character "/" usually indicates an "or" relationship between the associated objects.

First, a technical problem to be specifically resolved in this application is analyzed and proposed. In the conventional technology, a solution for transferring a register parameter between a block header layer and a block body layer includes a solution 1 and a solution 2.

In the solution 1, direct indexing is performed. To be specific, a register at the block header layer may be directly used at the block body layer. In this solution, specifically used registers (for example, 32 general-purpose registers r0 to r31 commonly used by a conventional reduced instruction set computer central processing unit (Reduced Instruction Set Computer CPU, RISC CPU), also referred to as global registers) are first declared in a block header description, and then the registers may be directly indexed in a specific intra-block instruction in a block body.

The solution 1 has the following disadvantages:
For the global registers, consumption is high, execution efficiency is low, and reusability of block body code is poor. In the direct indexing manner, each block instruction needs to occupy a global register, resulting in a waste of resources. During actual execution, usually, not all global registers (for example, 32 global registers) are used in the block body. For example, only eight global registers are used. However, the eight global registers still use global addresses (to be specific, each register still needs a 5-bit storage address), resulting in a waste of resources.

In addition, direct indexing for a global register may also reduce execution efficiency. For example, when an intra-block computing result needs to be temporarily stored without affecting output, because the global register is used, an output register is also needed to temporarily store the temporary result (this is also a waste of resources). This also determines that speculative execution of a next block instruction cannot be performed if execution of a current block instruction is not completed. This reduces execution efficiency because a processor cannot determine whether the result is a final result of the block instruction.

In addition, in this manner, an intra-block instruction in the block body also needs to be as complex as a conventional RISC instruction, and execution efficiency is also limited. In addition, in this manner, a global register usually needs to be directly referenced in each intra-block instruction. This is not conducive to reuse of block body code. For example, when two or more block instructions have a same pattern (for example, all the block instructions perform register addition), because the two or more block instructions use different global registers, code needs to be repeatedly written twice or more times, and code consumption naturally increases. This is not worthwhile.

In the solution 2, an output register is used by default. In this manner, an internal private register in a block instruction is used as an output register for each intra-block instruction, to reduce use of a global register. In this solution, for each intra-block instruction in the block instruction, a global register may be used only as an input register, and no global register needs to be specified as an output register. Instead, an internal private register (an intra-block register) is used to temporarily store a computing result of each intra-block instruction. When another intra-block instruction needs to reference these computation results, intra-block registers respectively corresponding to these computation results may be referenced only based on an offset between the intra-block instruction and a corresponding intra-block instruction. Compared with the solution 1, the solution 2 has higher execution efficiency.

The solution 2 has the following disadvantages:
An instruction occupies large space, and reusability of block body code is poor. In this manner, during actual writing of an intra-block instruction of a block instruction, instructions such as get and set need to be additionally used, so that a block engine of a processor can index and assign a value to a global register. Additionally used instructions such as get and set need to additionally occupy space, and consequently, the instructions occupy large space.

In addition, when instructions such as get and set are additionally used to index and assign a value to a global register, the global register still needs to be used in an intra-block instruction. This is not conducive to reuse of block body code either. When two or more block instructions have a same pattern but use different global registers, code still needs to be repeatedly written twice or more times.

To resolve the problems that execution efficiency is low, an instruction occupies large space, and reusability of a block body is poor during register parameter transfer between a block header layer and a block body layer in the conventional technology, with a comprehensive consideration of the disadvantages in the conventional technology, technical problems to be actually resolved in this application include the following:
A mapping relationship is to be established between a global register and an intra-block register by using a register mapping table. In embodiments of this application, a register mapping table may be established for a global register indicated by a block header and an intra-block register preset in a block body, so that indexing and output can be performed to the global register based on the intra-block register, and an intra-block instruction in the block body may no longer rely on instructions such as get and set to index or assign a value to the global register. This improves execution efficiency, and reduces space additionally occupied by use of instructions such as get and set in the block body. In addition, a global register may no longer be directly used in an intra-block instruction of a block instruction. This improves reusability of block body code. To be specific, when two or more block instructions have a same pattern but use different global registers, block body code does not need to be repeatedly written, and can be directly reused. For ease of understanding the register parameter transfer method for a block instruction provided in embodiments of this application, the following describes a system architecture and/or an application scenario of the register parameter transfer method for a block instruction provided in embodiments of this application. It can be understood that the system architecture and the application scenario described in embodiments of this application are intended to describe technical solutions in embodiments of this application more clearly, and do not constitute a limitation on the technical solutions provided in embodiments of this application.

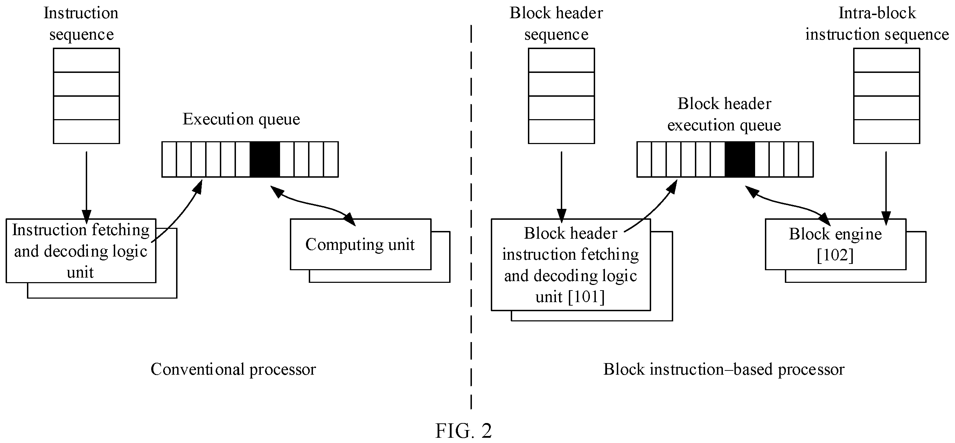

For a system architecture to which the register parameter transfer method for a block instruction provided in embodiments of this application is applicable, refer to FIG. 2. FIG. 2 is a diagram of a system architecture to which a register parameter transfer method for a block instruction is applied according to an embodiment of this application. The system architecture may be an architecture of a central processing unit (Central Processing Unit, CPU), or may be an architecture of a processor such as a graphics processing unit (Graphics Processing Unit, GPU) or a system-on-a-chip (system-on-a-chip, SoC). The system architecture may include one or more block header instruction fetching and decoding logic units [101] and one or more block engines [102]. It should be noted that a conventional processor usually includes an instruction fetching and decoding logic unit and a computing unit, and schedules a single instruction. In this embodiment of this application, the processor usually schedules and executes a block instruction by using the block engine [102]. To be specific, in the processor architecture in this embodiment of this application, each member of an execution queue is described as a group of instructions instead of one instruction. In addition, each block engine [102] is equivalent to a small conventional processor, and may use an internal execution system of the block engine [102], without having a relationship with other blocks. Therefore, implementation is simpler, and it is easier to extend a block processor by increasing a quantity of and a quantity of types of block engines, without greatly increasing complexity.

The block header instruction fetching and decoding logic unit [101] may be configured to perform instruction fetching and decoding on one or more block headers in a block header sequence, and then place the block header in a block header execution queue for management. In this embodiment of this application, when the block header instruction fetching and decoding logic unit [101] performs instruction fetching and decoding on a block header, the processor may determine a global register specifically used in a block instruction corresponding to the block header. In this way, after determining an intra-block register in a block body, the processor can establish a register mapping table for a global register and the intra-block register, so that the intra-block register can directly perform indexing and output to the global register, and an intra-block instruction in the block body may no longer rely on instructions such as get and set to index or assign a value to the global register. This improves execution efficiency, and reduces space additionally occupied by use of instructions such as get and set in the block body. In addition, a global register may no longer be directly used in an intra-block instruction of the block instruction. This improves reusability of block body code. The block engine [102] is equivalent to a small conventional processor, and may include an instruction fetching unit, a decoding unit, and a computing unit. The block engine [102] may be configured to perform instruction fetching, decoding, and computing on an intra-block instruction in an intra-block instruction sequence. In this embodiment of this application, the block engine may determine, based on the block header execution queue, a block body of a block instruction that needs to be processed, and perform instruction fetching, decoding, and computing on one or more intra-block instructions in the block body based on an intra-block instruction sequence. During computing, the block engine may determine a mapping relationship between a global register and an intra-block register based on the register mapping table, and may directly perform indexing and output to the global register by using the intra-block register. In this way, during actually writing of an intra-block instruction in the block body, instructions such as get and set are no longer needed for indexing or assigning a value to the global register, so that space additionally occupied by use of instructions such as get and set in the block body can be reduced. In addition, a global register may no longer be directly used in an intra-block instruction of the block instruction. This improves reusability of block body code. It should be noted that embodiments of this application may be applied to processor system architectures of various computers. The processor architecture of a computer in the foregoing figure is merely an example implementation of embodiments of this application. An architecture to which embodiments of this application are applicable includes but is not limited to the foregoing architecture. It should be understood that the processor architecture of the computer may include more or fewer units/modules than those shown in the figure, two or more units/modules may be combined, or there may be different unit/module configurations. The units/modules shown in the figure may be implemented in hardware that includes one or more signal processing circuits and/or application-specific integrated circuits, software, or a combination of hardware and software.

It can be understood that the register parameter transfer method for a block instruction provided in embodiments of this application may be performed by a terminal device. The terminal device is a device that can be abstracted as a computer system. A terminal device that supports a block instruction processing function may also be referred to as a block instruction processing apparatus. The block instruction processing apparatus may be an entire system of the terminal device, for example, an intelligent wearable device, a smartphone, a tablet computer, a notebook computer, a desktop computer, a vehicle-mounted computer, or a server; or may be a system or an apparatus that includes a plurality of entire systems; or may be some components in the terminal device, for example, a chip related to a block instruction processing function, for example, a block instruction-based processor or a system-on-a-chip (system-on-a-chip, SoC). This is not specifically limited in embodiments of this application. The system-on-a-chip is also referred to as a system chip.

For ease of understanding, the following first briefly describes structures and functions of a block header and a block body of a block instruction in embodiments of this application. It can be understood that the following descriptions are merely example descriptions of the structures and the functions of the block header and the block body, and do not constitute a specific limitation on the block header or the block body.

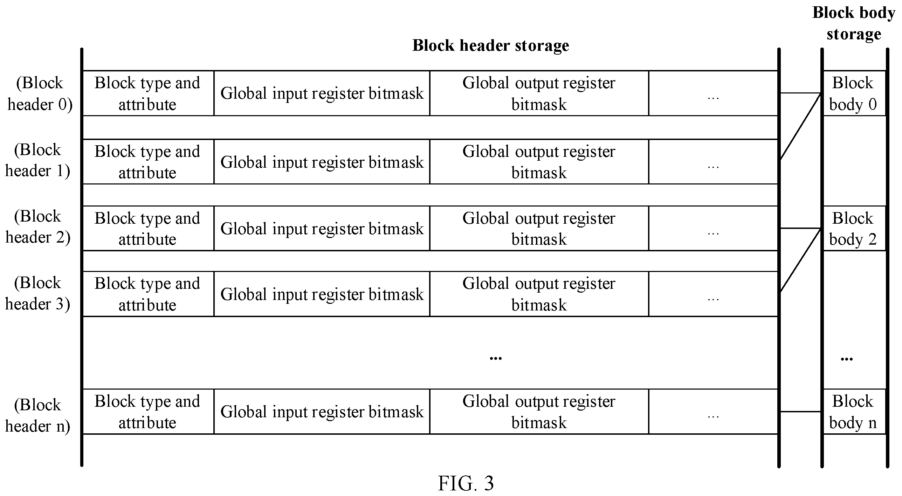

FIG. 3 is a diagram of a structure of a block header according to an embodiment of this application. One block header may correspond to one block body. When block instructions have a same pattern, different block headers may share one block body (for example, a block header 0 and a block header 1 share a block body 0, and a block header 2 and a block header 3 share a block body 2). To be specific, block body code is reused. Further, the block body code may alternatively be reused based on code of some intra-block instructions in the entire block body. Specifically, a block header of a block instruction may be a fixed-length RISC instruction, for example, a 128-bit RISC instruction, and may include information such as a type and an attribute of the block instruction, a global input register bitmask (Bitmask), a global output register bitmask, a jump pointer offset, and a block body pointer offset. Details are as follows:
The type of the block instruction may include a computation type, for example, fixed-point computation, floating-point computation, a custom block body, or an accelerator call.

The attribute of the block instruction may include a commit policy for the block instruction, for example, a quantity of times of repeatedly executing the block instruction, and whether execution of the block instruction needs to be atomic, visible, or ordered.

The global input register bitmask may indicate a global input register of the block instruction. Usually, one block instruction may have a maximum of 32 registers as global input registers. Names (Identity, ID) of the 32 input registers may be expressed in a format of a bitmask.

The global output register bitmask may indicate a global output register of the block instruction. Usually, one block instruction may have a maximum of 32 registers as global output registers. IDs of the 32 output registers may be expressed in a format of a bitmask.

It should be noted that the 32 global input/output registers (R0 to R31) are all physical registers (namely, general-purpose registers), to be specific, registers shared between block instructions. If a block instruction has 32 inputs, each bit in a 32-bit global input register bitmask of the block instruction is 1 (or may be represented by "0"). If a block instruction has 16 outputs, corresponding 19 bits in a 32-bit global input register bitmask of the block instruction are 1 (for example, 11110000110000011101111001011111, where in this case, output registers of the block instruction are 19 general-purpose registers: R0, R1, R2, R3, R4, R6, R9, R10, R11, R12, R14, R15, R16, R22, R23, R28, R29, R30, and R31). To be specific, bits corresponding to general-purpose registers used for inputs/outputs of the block instruction are 1 (or may be represented by "0"). Optionally, if a CPU has only 16 general-purpose registers, each block instruction usually has a maximum of 16 global input/output registers, and global input/output registers of each block instruction may be indicated by a 16-bit bitmask. It can be understood that, when the CPU has more general-purpose registers (for example, 64 general-purpose registers), each block instruction may alternatively have 64 global input/output registers. This is not specifically limited in this embodiment of this application.

The jump pointer offset may indicate a storage location of a block header of a next to-be-executed block instruction after execution of a current block instruction is completed.

The block body pointer offset may indicate a storage location of a block body of the current block instruction. Usually, the block body pointer offset may be added to a previous block body pointer to obtain a current block body pointer, in other words, obtain a storage location of a current block body.

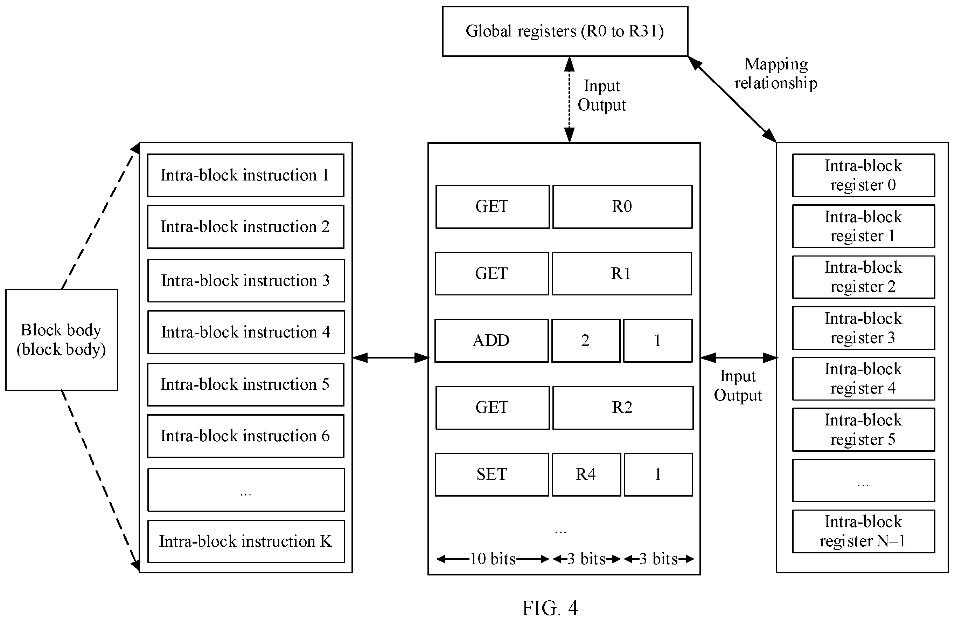

FIG. 4 is a diagram of a structure of a block body according to an embodiment of this application. The block body may include a series of intra-block instructions such as an intra-block instruction 1, an intra-block instruction 2, an intra-block instruction 3, ..., and an intra-block instruction K, and all the intra-block instructions are executed in sequence. It should be noted that different block body formats may be defined for different types of block instructions. A basic standard block instruction is used as an example. An intra-block instruction (block micro-instruction) may be a 16-bit fixed-length RISC instruction. For the standard block instruction, each intra-block instruction in a block body may be an instruction that includes a maximum of two inputs and one output.

As shown in FIG. 4, an input of a block instruction may be read from an output register of another block instruction through a get instruction in a block body. For example, the 1^{st} intra-block instruction (get R0) in FIG. 4 reads data written by another block instruction to the general-purpose register R0. For another example, the 2^{nd} intra-block instruction (get R1) in FIG. 4 reads data written by another block instruction to the general-purpose register R1. For another example, the 4^{th} intra-block instruction (get R2) in FIG. 4 reads data written by another block instruction to the general-purpose register R2. It should be noted that, in this embodiment of this application, a register mapping table is established to express a mapping relationship between a global register (a general-purpose register) indicated by a block header and an intra-block register, so that use of the get instruction can be reduced, and space additionally occupied by use of the get instruction is reduced.

As shown in FIG. 4, an output of a block instruction may be written, through a set instruction in a block body, to a corresponding output register, to be specific, written back to one or more of the foregoing 32 physical registers. In this embodiment of this application, a register mapping table is established to express a mapping relationship between a global register (a general-purpose register) indicated by a block header and an intra-block register, so that use of the set instruction can be reduced, and space additionally occupied by use of the set instruction is reduced. To sum up, in this embodiment of this application, a block instruction may access a global register (a general-purpose register) based on a register mapping table, or may access a general-purpose register through an explicit get or set instruction in an intra-block instruction, to obtain an output of another block instruction, or output an execution result of the block instruction. To be specific, in this embodiment of this application, access to a global register can be implemented based on a register mapping table, and an intra-block instruction can still access a global register through the get or set instruction. It should be noted that, in the register parameter transfer method for a block instruction provided in embodiments of this application, an execution component of a processor can also directly access a corresponding global register based on a register mapping table through register renaming (rename), without copying a value of the global register.

Optionally, inputs of most of intra-block instructions in a block body other than the foregoing special get instruction and set instruction may come from an output of a preceding intra-block instruction in the current block body. It should be noted that an execution result of each intra-block instruction in the block body may be implicitly written to an intra-block register (namely, an intra-block output register) corresponding to the intra-block instruction. Then a current intra-block instruction may index, based on a relative distance between instructions, an execution result of a preceding intra-block instruction that is temporarily stored in an intra-block register, and use the execution result as an input. In this way, during coding of an intra-block instruction, each intra-block instruction may not need to express an output register of the intra-block instruction. To be specific, each intra-block instruction may express only an operation code of the intra-block instruction and a maximum of two input registers (namely, a maximum of two relative distances). For example, the intra-block instruction is a 16-bit fixed-length RISC instruction, and a structure of the intra-block instruction may be shown in Table 1.

**Table 1**

| Bits 15 to 13 | Bits 12 to 10 | Bits 9 to 0 |
|---|---|---|
| Link (relative distance) 0 | Link (relative distance) 1 | Opcode (operation code) |

As shown in Table 1, the intra-block instruction with a length of 16 bits is used as an example. 10 bits (0 to 9) may be used to express the operation code, and three bits and the other three bits may be used to respectively express two input registers (namely, two relative distances). In this case, the relative distance ranges from 1 to 8. To be specific, the current intra-block instruction can index only an execution result of an instruction among the 1^{st} to the 8^{th} intra-block instructions preceding the current intra-block instruction, and use the execution result as an input. For example, two inputs of the 3^{rd} intra-block instruction (add T#1 T#2) in FIG. 4 respectively come from execution results of two instructions (the 1^{st} intra-block instruction and the 2^{nd} intra-block instruction) whose relative distances from the 3^{rd} intra-block instruction are 1 and 2 respectively. It can be understood that, if the current intra-block instruction has only one input, all remaining six bits other than the operation code may be used to express one input register. In this case, the relative distance ranges from 1 to 64. To be specific, the current intra-block instruction can index only an execution result of an instruction among the 1^{st} to the 64^{th} intra-block instructions preceding the current intra-block instruction, and use the execution result as an input.

For example, assembly of a block instruction may be as follows:
get R0 Note: This intra-block instruction may be removed after a register mapping table is established.
get R1 Note: This intra-block instruction may be removed after the register mapping table is established.
add T#1 T#2
get R2 Note: This intra-block instruction may be removed after the register mapping table is established.
Set T#1 R3 Note: This intra-block instruction may be removed after the register mapping table is established.

The 3^{rd} intra-block instruction (add T#1 T#2) is used as an example. T#1 represents an intra-block register corresponding to an intra-block instruction whose relative distance from the current intra-block instruction (add T#1 T#2) is 1, and the intra-block register stores an execution result of the intra-block instruction get R0. T#2 represents an intra-block register corresponding to an intra-block instruction whose relative distance from the current intra-block instruction (add T#1 T#2) is 2, and the in-block register stores an execution result of the intra-block instruction get R1. In this case, a computing operation actually performed by the 3^{rd} intra-block instruction (add T#1 T#2) is adding up data in the global registers R0 and R1.

The register parameter transfer method for a block instruction provided in this application is described below based on the diagram of the architecture provided in FIG. 2, the diagram of the structure of the block header provided in FIG. 3, and the diagram of the structure of the block body provided in FIG. 4.

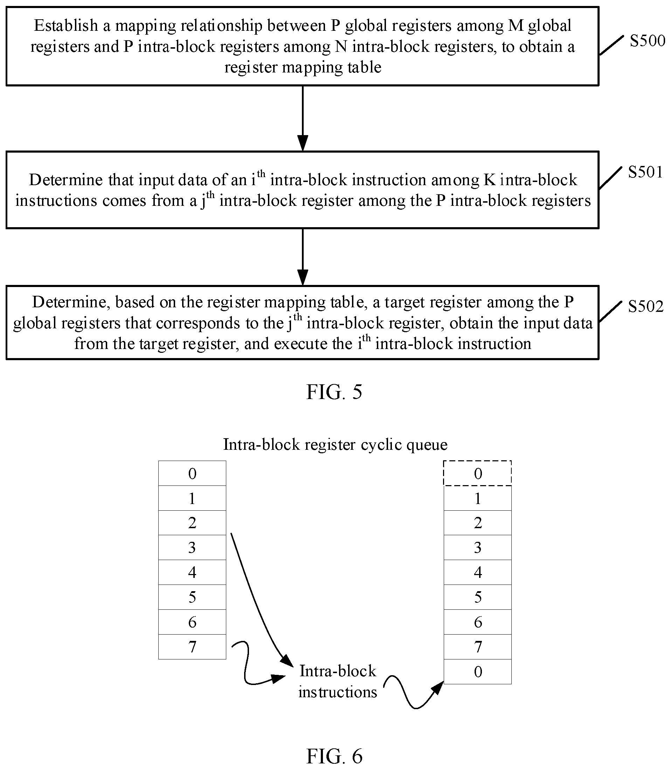

FIG. 5 is a schematic flowchart of a register parameter transfer method for a block instruction according to an embodiment of this application. The method may be applied to the block instruction-based processor architecture in FIG. 2. To be specific, the block instruction-based processor may be configured to support and perform step S500 to step S502 in the method process shown in FIG. 5. Step S500 to step S502 include the following descriptions.

Step S500: Establish a mapping relationship between P global registers among M global registers and P intra-block registers among N intra-block registers, to obtain a register mapping table.

Specifically, a block instruction processed by the block instruction-based processor may include a block header and a block body. The block header may indicate one or more global registers (namely, M global registers, which may include a global output register and a global input register) specifically used by the block instruction. The block body may include one or more intra-block instructions (namely, K intra-block instructions), and one or more intra-block registers (namely, N intra-block registers, which may include an intra-block output register and an intra-block input register) are set by default. An execution result of each intra-block instruction in the block body may be output to a corresponding intra-block register (which is an intra-block output register in this case) for temporary storage. To be specific, an intra-block register in the block body is configured to store an execution result output by a corresponding intra-block instruction among the K intra-block instructions in the block body. All of M, N, and K are integers greater than 0. On this basis, the block instruction-based processor may establish a register mapping table based on P global registers among the M global registers indicated by the block header and P intra-block registers among the N intra-block registers corresponding to the block body. The P global registers are in a one-to-one correspondence with the P intra-block registers. To be specific, the register mapping table may include an input index relationship between global input registers (namely, the P global registers) among the M global registers and intra-block input registers (namely, the P intra-block registers) among the N intra-block registers. In this way, a block engine [102] can access a global register from an intra-block register based on the register mapping table when executing an intra-block instruction. Optionally, the block instruction-based processor may alternatively establish a mapping relationship between the M global registers and some of the N intra-block registers. A quantity of the some of the N intra-block registers may be determined based on a formula: (1, 2, ..., MIN(M, N)) (to be specific, P may be any integer value ranging from 1 to MIN(M, N)), where 1 indicates that a sequence number of an intra-block register starts from 1. It can be understood that the sequence number of the intra-block register may alternatively start from another value, and the formula may be correspondingly modified. This is not specifically limited herein. When a quantity of global input registers among the M global registers indicated by the block header is greater than a quantity (N) of intra-block registers, a mapping relationship may not be established between all of the global input registers and the intra-block registers, and a mapping relationship is established between only some of the global input registers and the intra-block registers. It can be understood that a mapping relationship between a global output register and an intra-block register may also be established with reference to this method. Details are not described herein.

In a possible implementation, the block instruction-based processor may first determine, based on input information and intra-block output registers corresponding to respective execution results of the K intra-block instructions included in the block body, intra-block input registers (namely, the P intra-block registers) corresponding to respective input data of the K intra-block instructions. Both the intra-block input register and the intra-block output register are registers among the N default intra-block registers in the block body. Then the block instruction-based processor may establish a mapping relationship between the intra-block input registers and the intra-block output registers that are respectively corresponding to the K intra-block instructions, and the one or more global registers (namely, the M global registers, which may include a global input register and a global output register) indicated in the block header, to obtain a register mapping table. In this way, the block engine [102] can access a global register from an intra-block register based on the register mapping table when executing an intra-block instruction, to be specific, can obtain an input by indexing the global register and perform output to the global register.

Optionally, the one or more global registers (namely, the M global registers) indicated in the block header may include one or more global output registers (namely, S global registers) and one or more global input registers (namely, the P global registers). The register mapping table established by the block instruction-based processor may include an output index relationship between the one or more global output registers and one or more intra-block output registers (namely, S intra-block registers) among the N intra-block registers corresponding to the block body, and an input index relationship between the one or more global input registers and one or more intra-block input registers (namely, the P intra-block registers) among the N intra-block registers. In this way, when executing an intra-block instruction, the block engine [102] can access a global input register from an intra-block input register based on the input index relationship in the register mapping table to obtain an input of the intra-block instruction, and can access a global output register from an intra-block output register based on the output index relationship in the register mapping table to output an execution result of the intra-block instruction.

In a possible implementation, the block engine [102] may establish a mapping relationship between a global input register and an intra-block input register based on an indication sequence of the one or more global input registers (namely, the P global registers) indicated by the block header and an indication sequence of the intra-block input registers corresponding to the respective input data of the K intra-block instructions among the N intra-block registers, and may establish a mapping relationship between a global output register and an intra-block output register based on an indication sequence of the one or more global output registers (namely, the S global registers) indicated by the block header and a sequence of the intra-block output registers corresponding to the respective execution results of the K intra-block instructions among the N intra-block registers. In this way, when scheduling and executing a specific intra-block instruction in the block instruction, the block engine [102] can access a global input register from an intra-block input register based on the register mapping table to obtain data of the global input register and use the data as an input of the intra-block instruction, and can access a global output register from an intra-block output register based on the register mapping table to output an execution result of the block instruction to a corresponding global output register.

Step S501: Determine that input data of an i^{th} intra-block instruction among the K intra-block instructions comes from a j^{th} intra-block register among the P intra-block registers.

Specifically, the block engine [102] included in the block instruction-based processor may determine that input data of an intra-block instruction (namely, the i^{th} intra-block instruction) of one or more intra-block instructions (namely, the K intra-block instructions) comes from an intra-block register (namely, the j^{th} intra-block register) of one or more intra-block registers (namely, the P intra-block registers). Optionally, the block engine [102] may determine, based on input information of the i^{th} intra-block instruction, that the input data of the i^{th} intra-block instruction comes from the j^{th} intra-block register. The input information includes a relative distance between an intra-block register corresponding to an execution result of the i^{th} intra-block instruction and the j^{th} intra-block register. The intra-block register corresponding to the execution result of the i^{th} intra-block instruction is a t^{th} intra-block register. When t is greater than or equal to j, the relative distance may be t-j. When t is less than j, the relative distance may be N-j+t. To be specific, on the basis that the intra-block register corresponding to the execution result of the i^{th} intra-block instruction is determined, when performing instruction fetching and decoding on the i^{th} intra-block instruction, the block engine [102] may determine, based on the input information of the i^{th} intra-block instruction, that the input data of the i^{th} intra-block instruction comes from the j^{th} intra-block register among the N intra-block registers. For example, if the relative distance indicated by the input information is 3, the block engine [102] may find an intra-block register with a relative distance of 3, that is, the j^{th} intra-block register, through forward offsetting from the intra-block register corresponding to the execution result of the i^{th} intra-block instruction. It can be understood that the relative distance indicated by the input information may be an integer greater than 0, to be specific, may be a value other than 3. This is not specifically limited herein.

In a possible implementation, when using the one or more default intra-block registers (namely, the N intra-block registers) of the block instruction, the block engine [102] may manage the one or more intra-block registers by using a cyclic queue. FIG. 6 is a diagram of an intra-block register management queue according to an embodiment of this application. The block engine [102] may manage the N default intra-block registers of the block instruction by using the cyclic queue. For example, an execution result of the 1^{st} intra-block instruction may be first output to the 1^{st} intra-block register (which is set to 0), an execution result of the 2^{nd} intra-block instruction may be output to the 2^{nd} intra-block register (which is set to 1), and so on, and an execution result of the (N+1)^{th} intra-block instruction may be re-output to the intra-block register 0. Then each subsequent intra-block instruction always updates a last intra-block register in sequence, and abandons a value of an earliest intra-block register. It can be understood that the execution result of the (N+1)^{th} intra-block instruction overwrites the execution result originally output by the 1^{st} intra-block instruction to the 1^{st} intra-block register (which is set to 0). Based on an output algorithm of the cyclic queue, when the n^{th} intra-block instruction in the block body needs to index an intra-block register based on input information (for example, T#m), an intra-block register (namely, the j^{th} intra-block register) with an index subscript of (n-m)%N may be used for implementation, where m is a relative distance between an intra-block register to which an execution result of the n^{th} intra-block instruction is output by default and the intra-block register that the n^{th} intra-block instruction needs to index, and N is a quantity of default intra-block instructions of the block instruction. It should be noted that an execution result of an intra-block instruction may also overwrite an input mapping relationship between an intra-block register and a global register. For example, the i^{th} intra-block instruction may find the j^{th} intra-block register through indexing during execution, and then access a corresponding global input register (for example, r1) based on a mapping relationship. If an execution result of the (i+x)^{th} intra-block instruction is subsequently output to the j^{th} intra-block register by default, the execution result may overwrite a mapping relationship between the j^{th} intra-block register and the global input register (for example, r1). To be specific, when an intra-block instruction following the (i+x)^{th} intra-block instruction needs to index the j^{th} intra-block register, the intra-block instruction obtains the execution result of the (i+x)^{th} intra-block instruction, but does not access the global input register (for example, r1).

It should be noted that the syntax T#m is usually limited by a total quantity of intra-block registers, and an intra-block instruction usually cannot access intra-block output registers beyond a range of the total quantity by using T#m. For example, there are a total of eight intra-block registers. Usually, an intra-block instruction cannot index, by using T#m, an execution result of the 9^{th} intra-block instruction preceding the instruction. If the intra-block instruction needs to exceed this range, an intermediate intra-block instruction may be used for transit, or the execution result of the 9^{th} intra-block instruction may be written to a global register resource. It can be understood that the execution result of the 1^{st} intra-block instruction may be output to the 1^{st} intra-block register (which is set to 0) or another intra-block register based on the cyclic queue. For ease of description of this embodiment of this application, an example in which the execution result is output to the 1^{st} intra-block register (which is set to 0) is used. This is not specifically limited herein. Based on this, in this embodiment of this application, a mapping relationship may be established between a global input register and an intra-block register at a queue tail of the cyclic queue, so that an intra-block instruction in the front of the block instruction can access the global input register by indexing the intra-block register with an index subscript of (n-m)%N by using T#m.

Step S502: Determine, based on the register mapping table, a target register among the P global registers that corresponds to the j^{th} intra-block register, obtain the input data from the target register, and execute the i^{th} intra-block instruction.

Specifically, after determining that the input data of the i^{th} intra-block instruction comes from the j^{th} intra-block register, the block engine [102] included in the block instruction-based processor may determine, based on the mapping relationship in the register mapping table, the target global register corresponding to the j^{th} intra-block register. Then the block engine [102] may access the target global register, obtain target data from the target global register, and execute the i^{th} intra-block instruction by using the target data as an input.

In a possible implementation, in addition to step S500 to step S502, the process of the register parameter transfer method for a block instruction provided in this embodiment of this application further includes step S503. Step S503: Separately output, based on the register mapping table, an execution result or execution results of one or more intra-block instructions among the K intra-block instructions to a corresponding global register among the S global registers, and commit the block instruction. Specifically, the register mapping table further includes a mapping relationship between the S global registers and the S intra-block registers. After executing the K intra-block instructions in the block instruction, the block engine [102] may output, based on the register mapping table, an execution result of the block body in the block instruction to a corresponding global output register among the S global registers (namely, global output registers) indicated by the block header, and commit the block instruction.

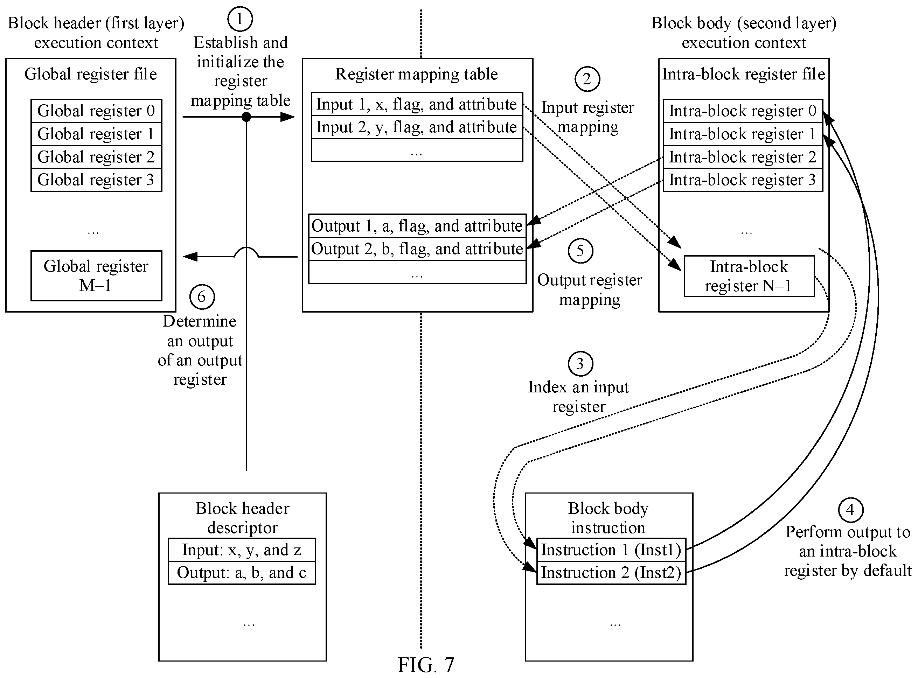

For ease of understanding the process of the register parameter transfer method for a block instruction provided in embodiments of this application, refer to FIG. 7. FIG. 7 is a diagram of an architecture of a register parameter transfer process for a block instruction according to this application. A quantity of global registers in a global register file and a quantity of global registers in an intra-block register file may be preset by a block instruction-based processor. Optionally, when performing instruction fetching and decoding on a block header of a block instruction, the block instruction-based processor may determine, based on a block header descriptor, global input registers (for example, x, y, and z) and global output registers (for example, a, b, and c) that are indicated by the block header; and establish a mapping relationship between global registers (including the global input registers and the global output registers) and intra-block registers (including intra-block input registers and intra-block output registers) to obtain a register mapping table. An input register mapping includes a mapping between a global input register and a register at a tail of an intra-block register management queue. An intra-block instruction (an instruction 1) in a block body may find, through indexing, the global input register (for example, the register x) based on the register (an intra-block register N-2) at the tail of the intra-block register management queue during execution. In addition, an execution result of the intra-block instruction that is obtained after the execution is completed may be output to a register (an intra-block register 0) at a head of the intra-block register management queue by default. A subsequent intra-block instruction (an instruction 2) in the block body performs indexing according to the foregoing process during execution, to find, through indexing, a global input register (y) based on an intra-block register N-1, and an execution result is output to an intra-block register 1 by default. Then an execution result of the block instruction is mapped to a global output register based on the register mapping table. An output register mapping includes a mapping relationship between a global output register and an intra-block register to which an intra-block instruction performs output by default. It should be noted that, in addition to the mapping relationship between the global registers and the intra-block registers, the register mapping table may further include other information, such as flag (flags) information and attribute (ref) information of registers.

The foregoing briefly describes the process of the register parameter transfer method for a block instruction provided in embodiments of this application. The following continues to describe effect of scheduling a block instruction by using the register parameter transfer method for a block instruction provided in embodiments of this application. For more convenient and more intuitive understanding of effect of embodiments of this application, the following compares code assembly for a specific block instruction based on the register parameter transfer method for a block instruction provided in embodiments of this application with code assembly based on a conventional technology 1 and a conventional technology 2. For example, two block instructions both perform register addition. Values of four input registers are added up, and an addition result is output to the 1^{st} input register.

In an implementation of the conventional technology 1, direct indexing is performed, and code assembly may be as follows:
Block1(input=r1, r2, r3, r4; output=r1)
Block2(input=r5, r6, r7, r8; output=r5)
Block1:
   Add r1, r1, r2 #r1=r1+r2 (the same below)
   Add r1, r1, r3
   Add r1, r1, r4
Block2:
   Add r5, r5, r6
   Add r5, r5, r7
   Add r5, r5, r8

The foregoing defines two block instructions (Block, the Block1 and the Block2). The two blocks have a same pattern, and each indicate four global input registers and one global output register. Global input registers of the Block1 are r1, r2, r3, and r4, and a global output register is r1. Global input registers of the Block2 are r5, r6, r7, and r8, and a global output register is r5.

In an implementation of the conventional technology 2, an output register is used by default, and code assembly may be as follows:
Block1(input=r1, r2, r3, r4; output=r1)
Block2(input=r5, r6, r7, r8; output=r5)
Block1:
   Get r1 # Input is performed to r1, and output is performed to a default intra-block register of the get r1 instruction (the same below).
   Get r2
   Get r3
   Get r4
   Add t#3, t#4 # Counting is performed upward. 3 corresponds to an intra-block register of Get r2, and 4 corresponds to an intra-block register of Get r1.
   Add t#2, t#3 # Counting is performed upward. 2 corresponds to an intra-block register of Get r4, and 3 corresponds to an intra-block register of Get r3.
   Add t#1, t#2
   Set t#1, r1 #An execution result of the "Add t#1, t#2" instruction is output to the global register r1.
Block2:
   Get r5
   Get r6
   Get r7
   Get r8
   Add t#3, t#4
   Add t#2, t#3
   Add t#1, t#2
   Set t#1, r5

The foregoing defines two block instructions (Block, the Block1 and the Block2). The two blocks have a same pattern, and each indicate four global input registers and one global output register. Global input registers of the Block1 are r1, r2, r3, and r4, and a global output register is r1. Global input registers of the Block2 are r5, r6, r7, and r8, and a global output register is r5. In this example, each intra-block instruction has only an input register, and no output register needs to be specified. Another intra-block instruction may reference these output registers only based on an offset between the intra-block instruction and an intra-block instruction corresponding to these output registers. For a block engine, the extra get and set instructions are only indexes and do not need to be executed. The get and set instructions do not affect execution efficiency, but need to additionally occupy specific space.

Based on the register parameter transfer method for a block instruction provided in embodiments of this application, code assembly may be as follows:
Block1(input=r1, r2, r3, r4; output=r1)
Block 1(input=r5, r6, r7, r8; output=r5)
Block1:
   Add t#3, t#4
   Add t#2, t#3
   Add t#1, t#2

The foregoing defines two block instructions (Block, the Block1 and the Block1). The two different Block1 have a same pattern, and each indicate four global input registers and one global output register. The two different Block1 have different block headers and have a same block body (reused). Global input registers of the 1^{st} Block1 are r1, r2, r3, and r4, and a global output register is r1. Global input registers of the 2^{nd} Block1 are r5, r6, r7, and r8, and a global output register is r5. In this example, the 1^{st} intra-block instruction (namely, the i^{th} intra-block instruction) references t#3 and t#4. This is meaningless from a perspective of an instruction distance. However, from a perspective of a block header input, the block engine [102] considers that there are four virtual get instructions for r1 to r4 before the 1^{st} intra-block instruction, and a register mapping table includes a mapping between intra-block registers corresponding to the four virtual get instructions and corresponding global registers. Therefore, the 1^{st} intra-block instruction finds the global registers r2 and r1 (to be specific, global registers corresponding to the j^{th} intra-block register) through indexing by using t#3 and t#4. Similarly, the 2^{nd} intra-block instruction (namely, the i^{th} intra-block instruction) Add t#2, t#3 may find the two global registers r4 and r3 (to be specific, global registers corresponding to the j^{th} intra-block register) through indexing.

In addition, because a mapping relationship is established between an intra-block register and a global register based on the register mapping table, indexes such as the global registers r1 and r2 are not included in a specific intra-block instruction in the block body. Even if the original Block1 and Block2 have a same pattern, code still needs to be repeatedly written twice because used specific global registers are different. However, in this case, the same block body can be reused without repeatedly writing code.

It should be noted that this manner may alternatively be further extended. Instructions such as get and set are still used in assembly code, and these global registers may still be referenced based on subscripts of the engine, without being indexed by using actual global register addresses.

It can be understood that a status of a global register may be checked when an entire block instruction is finally committed. If no output is performed to a specific global output register, the global output register may be filled from a corresponding intra-block register based on the register mapping table.

To sum up, compared with a solution for transferring a register parameter between a block header layer and a block body layer in the conventional technology, in embodiments of this application, a register mapping table may be established for a global register indicated by a block header and an intra-block register preset in a block body, so that indexing and output can be performed to the global register based on the intra-block register, and an intra-block instruction in the block body may no longer rely on instructions such as get and set to index or assign a value to the global register. This improves execution efficiency, and reduces space additionally occupied by use of instructions such as get and set in the block body. In addition, a global register may no longer be directly used in an intra-block instruction of a block instruction. This improves reusability of block body code. To be specific, when two or more block instructions have a same pattern but use different global registers, block body code does not need to be repeatedly written, and can be directly reused.

The foregoing describes the method in embodiments of this application in detail. The following provides several related apparatuses in embodiments of this application.

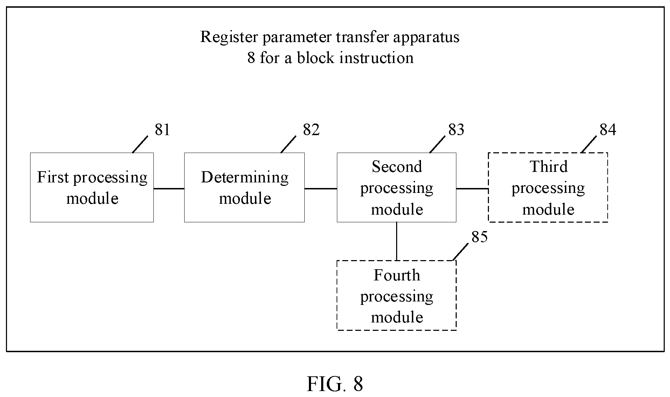

FIG. 8 is a diagram of a structure of a register parameter transfer apparatus for a block instruction according to an embodiment of this application. The register parameter transfer apparatus 8 for a block instruction may include a first processing module 81, a determining module 82, and a second processing module 83, and may further include a third processing module 84 and a fourth processing module 85. The units are described in detail below.

The first processing module 81 is configured to establish a mapping relationship between P global registers among M global registers and P intra-block registers among N intra-block registers, to obtain a register mapping table, where the P global registers are in a one-to-one correspondence with the P intra-block registers, and both M and N are integers greater than 0.

The determining module 82 is configured to determine that input data of an i^{th} intra-block instruction among K intra-block instructions comes from a j^{th} intra-block register among the P intra-block registers, where i is 1, 2, ..., or K, and j is 1, 2, ..., or P.

The second processing module 83 is configured to determine, based on the register mapping table, a target register among the P global registers that corresponds to the j^{th} intra-block register, obtain the input data from the target register, and execute the i^{th} intra-block instruction.

In a possible implementation, the determining module 82 is specifically configured to:
determine the j^{th} intra-block register based on input information in the i^{th} intra-block instruction, where an intra-block register corresponding to an execution result of the i^{th} intra-block instruction is a t^{th} intra-block register, and when t is greater than or equal to j, the input information includes a relative distance t-j between the t^{th} intra-block register and the j^{th} intra-block register, or when t is less than j, the input information includes a relative distance N-j+t between the t^{th} intra-block register and the j^{th} intra-block register.

In a possible implementation, the first processing module 81 is specifically configured to:
determine, based on input information and intra-block registers corresponding to respective execution results of the K intra-block instructions, the P intra-block registers corresponding to respective input data of the K intra-block instructions; and
establish the mapping relationship between the P intra-block registers and the P global registers.

In a possible implementation, the intra-block registers corresponding to the respective execution results of the K intra-block instructions include S intra-block registers, and the apparatus further includes:
a third processing module 84, configured to establish a mapping relationship between S global registers among the M global registers and the S intra-block registers, where the S global registers are in a one-to-one correspondence with the S intra-block registers.

In a possible implementation, the first processing module 81 is specifically configured to:
establish the mapping relationship between the P intra-block registers and the P global registers based on a sequence of the P intra-block registers corresponding to the respective input data of the K intra-block instructions among the N intra-block registers and an indication sequence of the P global registers in the block header; and
the third processing module 84 is specifically configured to:
   establish the mapping relationship between the S intra-block registers and the S global registers based on a sequence of the S intra-block registers among the N intra-block registers and an indication sequence of the S global registers in the block header.

In a possible implementation, the register mapping table further includes the mapping relationship between the S global registers and the S intra-block registers, and the apparatus further includes:
a fourth processing module 85, configured to separately output, based on the register mapping table, an execution result or execution results of one or more intra-block instructions among the K intra-block instructions to a corresponding global register among the S global registers, and commit the block instruction.

It should be noted that, for functions of the functional units/modules in the register parameter transfer apparatus 8 for a block instruction described in this embodiment of this application, reference may be made to related descriptions in the foregoing method embodiments. Details are not described herein again.

It should be noted that the register parameter transfer apparatus for a block instruction described in this application is not limited thereto. The register parameter transfer apparatus for a block instruction may be located in any terminal device, for example, a computer, a computing device, a mobile phone, a tablet computer, or a server. The register parameter transfer apparatus for a block instruction may be specifically a chip, a chipset, or a circuit board equipped with a chip or a chipset. The chip, the chipset, or the circuit board equipped with the chip or the chipset may operate when driven by necessary software. For example, the register parameter transfer apparatus for a block instruction may be:
(1) an independent integrated circuit IC, a chip, or a chip system or subsystem;
(2) a set including one or more ICs, where optionally, the set of ICs may alternatively include a storage component for storing data and a computer program;
(3) a module that can be embedded in another device; or
(4) others.

An embodiment of this application further provides a computer-readable storage medium. The computer-readable storage medium stores computer program code. When a processor executes the computer program code, a computer is enabled to perform the method in any one of the foregoing embodiments.

An embodiment of this application further provides a terminal device. The terminal device may exist in a product form of a chip. The terminal device includes a processor. The processor is configured to support the terminal device in implementing a corresponding function in the method in any one of the foregoing embodiments. The terminal device may further include a memory. The memory is configured to be coupled to the processor, and the memory stores program instructions and data that are necessary for the terminal device. The terminal device may further include a communication interface, configured to implement communication between the terminal device and another device or a communication network.

An embodiment of this application further provides a computer program product. When the computer program product is run on a computer, the computer is enabled to perform the method in any one of the foregoing embodiments.

An embodiment of this application provides a chip system. The chip system includes a processor, configured to support a device in implementing a function in the first aspect, for example, generating or processing information in the register parameter transfer method for a block instruction. In a possible design, the chip system further includes a memory, and the memory is configured to store program instructions and data that are necessary for the device. The chip system may include a chip, or may include a chip and another discrete component.

In the foregoing embodiments, the descriptions in the embodiments have respective focuses. For a part that is not described in detail in an embodiment, refer to related descriptions in other embodiments.

It should be noted that, for ease of description, the foregoing method embodiments are described as a combination of a series of actions. However, persons skilled in the art should be aware that this application is not limited to the described order of the actions, because some steps may be performed in another order or simultaneously according to this application. In addition, persons skilled in the art should also be aware that embodiments described in this specification are all example embodiments, and the described actions and modules are not necessarily required for this application.

In the several embodiments provided in this application, it should be understood that the disclosed apparatus may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in electrical or another form.

The units described as separate parts may or may not be physically separate, and parts shown as units may or may not be physical units, to be specific, may be located in one place, or may be distributed on a plurality of network units. Some or all of the units may be selected according to actual requirements to achieve the objectives of the solutions in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, a network device, or the like, and may be specifically a processor in a computer device) to perform all or some of the steps of the methods described in embodiments of this application. The storage medium may include any medium that can store program code, for example, a USB flash drive, a removable hard disk, a magnetic disk, an optical disc, a read-only memory (Read-Only Memory, ROM for short), or a random access memory (Random Access Memory, RAM for short).

The foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions in embodiments of this application.

## Claims

1. A register parameter transfer method for a block instruction, wherein the block instruction comprises a block header and a block body, the block header indicates M global registers corresponding to the block instruction, the block body comprises K intra-block instructions, the K intra-block instructions correspond to N intra-block registers, K is an integer greater than 0, and the method comprises:
establishing a mapping relationship between P global registers among the M global registers and P intra-block registers among the N intra-block registers, to obtain a register mapping table, wherein the P global registers are in a one-to-one correspondence with the P intra-block registers, and both M and N are integers greater than 0;
determining that input data of an i^{th} intra-block instruction among the K intra-block instructions comes from a j^{th} intra-block register among the P intra-block registers, wherein i is 1, 2, ..., or K, and j is 1, 2, ..., or P; and
determining, based on the register mapping table, a target register, among the P global registers, that corresponds to the j^{th} intra-block register, obtaining the input data from the target register, and executing the i^{th} intra-block instruction.

2. The method according to claim 1, wherein the determining that input data of an i^{th} intra-block instruction among the K intra-block instructions comes from a j^{th} intra-block register among the P intra-block registers comprises:
determining the j^{th} intra-block register based on input information in the i^{th} intra-block instruction, wherein an intra-block register corresponding to an execution result of the i^{th} intra-block instruction is a t^{th} intra-block register, and when t is greater than or equal to j, the input information comprises a relative distance t-j between the t^{th} intra-block register and the j^{th} intra-block register, or when t is less than j, the input information comprises a relative distance N-j+t between the t^{th} intra-block register and the j^{th} intra-block register.

3. The method according to claim 1 or 2, wherein the establishing a mapping relationship between P global registers among the M global registers and P intra-block registers among the N intra-block registers comprises:
determining, based on input information and intra-block registers corresponding to respective execution results of the K intra-block instructions, the P intra-block registers corresponding to respective input data of the K intra-block instructions; and
establishing the mapping relationship between the P intra-block registers and the P global registers.

4. The method according to any one of claims 1 to 3, wherein the intra-block registers corresponding to the respective execution results of the K intra-block instructions comprise S intra-block registers, and the method further comprises:
establishing a mapping relationship between S global registers among the M global registers and the S intra-block registers, wherein the S global registers are in a one-to-one correspondence with the S intra-block registers.

5. The method according to claim 4, wherein the establishing a mapping relationship between P global registers among the M global registers and P intra-block registers among the N intra-block registers comprises:
establishing the mapping relationship between the P intra-block registers and the P global registers based on a sequence of the P intra-block registers corresponding to the respective input data of the K intra-block instructions among the N intra-block registers and an indication sequence of the P global registers in the block header; and
the establishing a mapping relationship between S global registers among the M global registers and the S intra-block registers comprises:
establishing the mapping relationship between the S intra-block registers and the S global registers based on a sequence of the S intra-block registers among the N intra-block registers and an indication sequence of the S global registers in the block header.

6. The method according to claim 4 or 5, wherein the register mapping table further comprises the mapping relationship between the S global registers and the S intra-block registers, and the method further comprises:
separately outputting, based on the register mapping table, an execution result or execution results of one or more intra-block instructions among the K intra-block instructions to a corresponding global register among the S global registers, and committing the block instruction.

7. A register parameter transfer apparatus for a block instruction, wherein the block instruction comprises a block header and a block body, the block header indicates M global registers corresponding to the block instruction, the block body comprises K intra-block instructions, the K intra-block instructions correspond to N intra-block registers, K is an integer greater than 0, and the apparatus comprises:
a first processing module, configured to establish a mapping relationship between P global registers among the M global registers and P intra-block registers among the N intra-block registers, to obtain a register mapping table, wherein the P global registers are in a one-to-one correspondence with the P intra-block registers, and both M and N are integers greater than 0;
a determining module, configured to determine that input data of an i^{th} intra-block instruction among the K intra-block instructions comes from a j^{th} intra-block register among the P intra-block registers, wherein i is 1, 2, ..., or K, and j is 1, 2, ..., or P; and
a second processing module, configured to determine, based on the register mapping table, a target register among the P global registers that corresponds to the j^{th} intra-block register, obtain the input data from the target register, and execute the i^{th} intra-block instruction.

8. The apparatus according to claim 7, wherein the determining module is specifically configured to:
determine the j^{th} intra-block register based on input information in the i^{th} intra-block instruction, wherein an intra-block register corresponding to an execution result of the i^{th} intra-block instruction is a t^{th} intra-block register, and when t is greater than or equal to j, the input information comprises a relative distance t-j between the t^{th} intra-block register and the j^{th} intra-block register, or when t is less than j, the input information comprises a relative distance N-j+t between the t^{th} intra-block register and the j^{th} intra-block register.

9. The apparatus according to claim 7 or 8, wherein the first processing module is specifically configured to:
determine, based on input information and intra-block registers corresponding to respective execution results of the K intra-block instructions, the P intra-block registers corresponding to respective input data of the K intra-block instructions; and
establish the mapping relationship between the P intra-block registers and the P global registers.

10. The apparatus according to any one of claims 7 to 9, wherein the intra-block registers corresponding to the respective execution results of the K intra-block instructions comprise S intra-block registers, and the apparatus further comprises:
a third processing module, configured to establish a mapping relationship between S global registers among the M global registers and the S intra-block registers, wherein the S global registers are in a one-to-one correspondence with the S intra-block registers.

11. The apparatus according to claim 10, wherein the first processing module is specifically configured to:
establish the mapping relationship between the P intra-block registers and the P global registers based on a sequence of the P intra-block registers corresponding to the respective input data of the K intra-block instructions among the N intra-block registers and an indication sequence of the P global registers in the block header; and
the third processing module is specifically configured to:
establish the mapping relationship between the S intra-block registers and the S global registers based on a sequence of the S intra-block registers among the N intra-block registers and an indication sequence of the S global registers in the block header.

12. The apparatus according to claim 10 or 11, wherein the register mapping table further comprises the mapping relationship between the S global registers and the S intra-block registers, and the apparatus further comprises:
a fourth processing module, configured to separately output, based on the register mapping table, an execution result or execution results of one or more intra-block instructions among the K intra-block instructions to a corresponding global register among the S global registers, and commit the block instruction.

13. A computer-readable storage medium, comprising instructions, wherein when the instructions are run on a computer, the computer is enabled to perform the method according to any one of claims 1 to 6.

14. A computer program, wherein the computer program comprises instructions, and when the computer program is executed by a computer, the computer is enabled to perform the method according to any one of claims 1 to 6.

15. A terminal device, comprising a processor and a memory, wherein the memory is configured to store program code, and when the program code is executed by the processor, the terminal device implements the method according to any one of claims 1 to 6.

16. A chip system, wherein the chip system comprises at least one processor, a memory, and an interface circuit, the memory, the interface circuit, and the at least one processor are interconnected through a line, the at least one memory stores instructions, and when the instructions are executed by the processor, the method according to any one of claims 1 to 6 is implemented.
